# EUROPEAN PATENT APPLICATION

(11) **EP 3 163 443 A1**
(43) Date of publication of application: **03.05.2017**
(21) Application number: 15020207.5
(22) Date of filing: 27.10.2015
(51) Int. Cl.: G06F 9/50, G06F 9/54

(54) **MIDDLEWARE SOFTWARE BROKEROPTILO**

(71) Applicant: Comp-Win Sp. z o.o., 61-062 Poznan (PL)
(72) Inventor: Szymkowiak, Tomasz, 62-020 Swarzedz (PL); Talarek, Przemyslaw, 64-400 Miedzychód (PL); Wysocki, Wiktor, 61-131 Poznan (PL)

(57) **Abstract**

Communication in the field of computing and administrative tasks is achieved through message queues in the open MQ class system. Messages received by BrokerOptilo have a fixed structure, including for example: message type, calculations' input data, message priority, maximum computing time, environment in which the calculations should be made. Calculations are performed in a multi-server architecture, and therefore queues divide into:
- public - messages sent to any computing server, undertaken by the first available server,
- private - messages directed to a particular computing server.

Reply messages prepared by broker contain, for example: message type, results of calculations, environment in which the calculations are made, possible calculation error messages. The technology used to prepare BrokerOptilo: Java

## Description

### FUNCTIONAL DESCRIPTION OF BROKEROPTlLO SOFTWARE

BrokerOptilo application acts as an intermediary between the MQ-class queuing system (sometimes called message-oriented middleware), to which administrative and computing tasks are forwarded, and computing systems which performs the calculations.

Tasks carried out by BrokerOptilo as part of computing processes include:
- conducting monitoring at queuing system in anticipation of computing and administrative tasks directed to computing systems (1),
- receiving from queuing system tasks directed to computing systems associated with broker (2),
- validation of received messages (3),
- configuration of computing environment (4) and transfer of computing tasks to computing systems (5),
- monitoring computing process (6)
- receiving calculation results from computing systems (7),
- construction of a response message containing the result of calculations (8),
- publishing a reply message in the queuing system (9),
- logging activity and any errors of broker (10).

Tasks carried out by BrokerOptilo as part of administrative processes include:
- configurations of new computing environments (11),
- managing priority of administrative and computing messages (12),
- managing a pool of computing threads available on server (13),
- blocking an undertaking of new computing tasks, management of computing tasks started before installation of the lock (finalisation), removing locks (14),
- cancellation of undertaken computing tasks (15),
- archivisation of computing environments (16),
- managing connection with queuing (17).

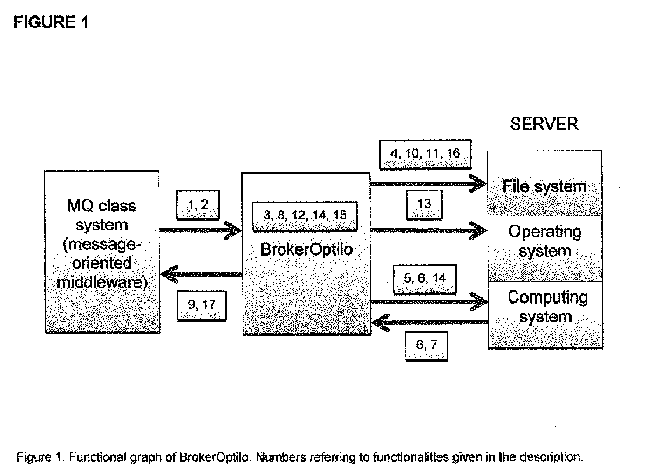

## Claims

1. Method of operating a data-processing system comprising steps given as a functions in a description. A computer program [product] is adapted to perform said method.
